# EUROPEAN PATENT APPLICATION

(11) **EP 3 805 022 A1**
(43) Date of publication of application: **14.04.2021**
(21) Application number: 19812265.7
(22) Date of filing: 15.05.2019
(51) Int. Cl.: B60C 15/06

(54) **PNEUMATIC TIRE**

(30) Priority: 30.05.2018 JP 2018103628
(71) Applicant: Bridgestone Corporation, Chuo-Ku Tokyo 104-8340 (JP)
(72) Inventor: ARIMA, Masayuki, Tokyo 104-8340 (JP)
(74) Representative: Oxley, Robin John George
(86) International application number: PCT/JP2019/019327
(87) International publication number: WO 2019/230401

(57) **Abstract**

A pneumatic tire includes a carcass whose cords are coated with coating rubber, at least one of a bead core and a bead filler whose outer surface which faces the carcass is formed from a resin that is harder than the coating rubber, and a buffer layer that is disposed between the coating rubber and the resin, and that reduces shear stress generated in the coating rubber.

## Description

### Technical Field

The present disclosure relates to a pneumatic tire having at least one of a bead filler or a bead core whose outer surface is formed from a resin material, and that has a carcass ply whose cords are coated with coating rubber.

### Background Art

A pneumatic tire in which a carcass ply having cords provided in a bead filler and a bead core that are coated with coating rubber is folded over is used as a pneumatic tire that is fitted onto an automobile (see, for example, Utility Model Application Publication No. H9-366 and Japanese Unexamined Patent Application Publication No. H2-151510).

### SUMMARY OF THE INVENTION

### Technical Problem

If a tire becomes deformed while that tire is rolling under a load, shear strain is generated in the coating rubber interposed between the carcass and the bead core, and also between the cords of the carcass and the bead filler. For example, directly beneath the load on a pneumatic tire, shear strain is generated in a radial direction of the tire between the carcass and the bead filler, or between the carcass and the bead core, and shear strain is also generated in a circumferential direction of the tire in leading portions and in trailing portions of the tire.

If a hard resin is used for the bead filler and the bead core in order to secure sufficient bending rigidity and the like, then the difference between the modulus of elasticity of this hard resin and the modulus of elasticity of the coating rubber used to coat the cords of the carcass increases. In addition, the shear strain generated between the carcass and the bead filler, or between the carcass and the bead core also increases, so that there is a possibility of the coating rubber peeling off. Accordingly, there is room for improvement from this standpoint.

The present disclosure was conceived in view of the above-described circumstances, and it is an object thereof to provide a pneumatic tire in which shear strain generated in the coating rubber of a carcass is reduced.

### Solution to the Problem

A pneumatic tire according to a first aspect includes a carcass having cords that are coated with a coating rubber, at least one of a bead core or a bead filler having an outer surface that faces the carcass and being formed from a resin that is harder than the coating rubber, and a buffer layer that is disposed between the coating rubber and the resin, and that reduces shear stress generated in the coating rubber.

This shear stress increases proportionally as the difference between the tensile modulus of the coating rubber and that of the bead core increases, and as the difference between the tensile modulus of the coating rubber and that of the bead filler increases. For example, if a hard resin is used for the bead filler for the purpose of reducing the size of the bead filler, then the aforementioned shear stress increases, and there is a concern that it will become easier for the coating rubber of the carcass to peel off.

In the pneumatic tire according to the first aspect, because a buffer layer that reduces shear stress is disposed between the coating rubber and the resin, compared to a case in which the buffer layer is not provided, it is possible to reduce shear stress that is generated in the coating rubber of the carcass. As a consequence, it is possible to inhibit peeling of the coating rubber of the carcass that is caused by shear stress.

### Advantageous Effects of the Invention

As has been described above, according to the pneumatic tire of the present disclosure the excellent effect is achieved that is possible to inhibit peeling of the coating rubber of the carcass.

### BRIEF DESCRIPTION OF THE DRAWINGS

FIG. 1 is a cross-sectional view along a rotation axis of a pneumatic tire showing a pneumatic tire according to an exemplary embodiment of the present disclosure.
FIG. 2 is a cross-sectional view of a carcass ply, a buffer layer, and a bead filler.
FIG. 3 is a cross-sectional view of a carcass ply, a buffer layer, and a bead core.

### DESCRIPTION OF THE EMBODIMENTS

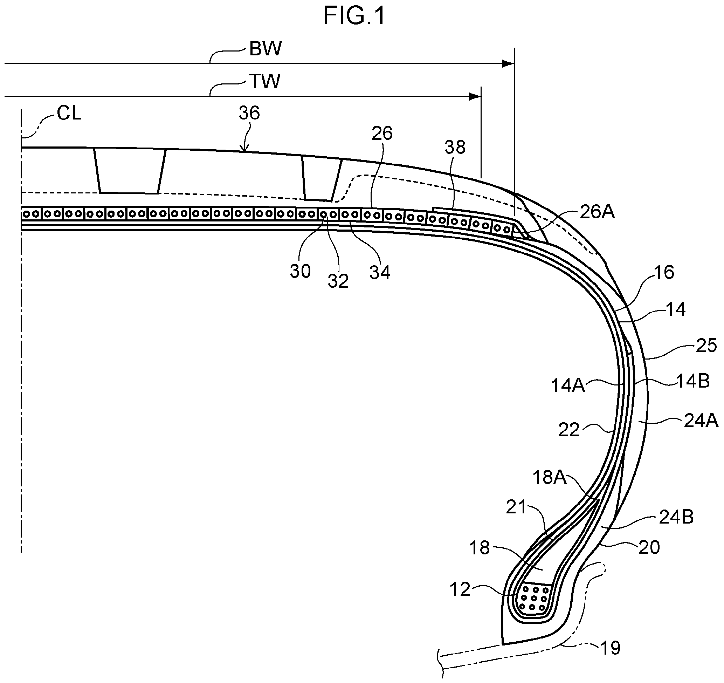

A pneumatic tire 10 according to an exemplary embodiment of the present disclosure will now be described using FIG. 1 through FIG. 3.

As is shown in FIG. 1, the pneumatic tire 10 of the present exemplary embodiment is what is known as a radial pneumatic tire which is used, for example, in a passenger vehicle, and is provided with a pair of bead portions 20 in each of which is embedded a bead core 12. A carcass 16 that is formed by a single layer of carcass ply 14 spans the distance between one bead portion 20 and the other bead portion 20. Note that FIG. 1 shows a shape of the pneumatic tire 10 when this is in a natural state prior to being inflated with air (i.e., is a state in which the tire internal pressure equals the atmospheric pressure), and has been fitted onto a standard rim 19.

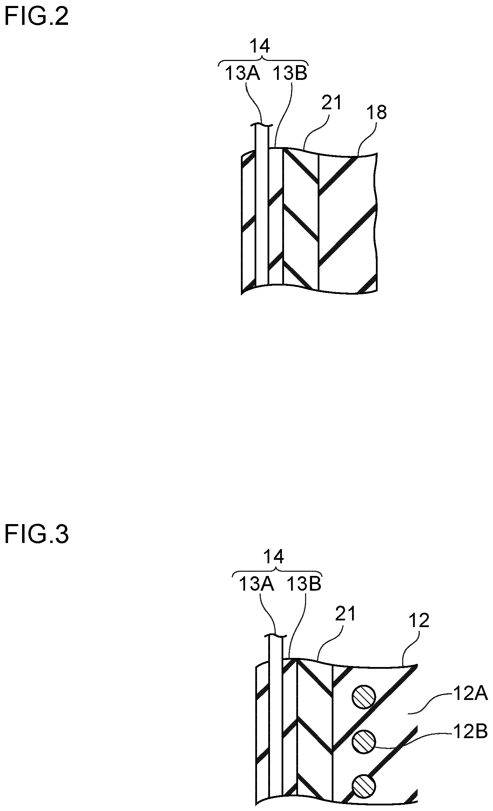

The carcass ply 14 is formed by coating a plurality of cords 13A (not shown in FIG. 1; see FIG. 2) that extend in a radial direction of the pneumatic tire 10 with coating rubber 13B (not shown in FIG. 1; see FIG. 2). In other words, the pneumatic tire 10 of the present exemplary embodiment is what is known as a radial pneumatic tire. The material forming the cords 13A of the carcass ply 14 is, for example, PET, however, another conventionally known material may be used instead.

End portions in a tire width direction of the carcass ply 14 are folded respectively towards an outer side in the tire radial direction around their corresponding bead core 12. A portion of the carcass ply 14 that spans from one bead core 12 to the other bead core 12 is called a main body portion 14A, while the folded portion of the carcass ply 14 that extends from the bead core 12 is called a folded portion 14B.

Bead filler 18 whose thickness gradually decreases towards the outer side in the tire radial direction from each bead core 12 is disposed between each main body portion 14A and the corresponding folded portion 14B of the carcass ply 14. Note that in the pneumatic tire 10 of the present exemplary embodiment, a portion located on an inner side in the tire radial direction from an outer-side end 18A in the tire radial direction of the bead filler 18 forms the bead portion 20.

### (Bead Core)

In each bead core 12 of the present exemplary embodiment, bead cords 12B are coated with a coating layer 12A. As an example, the bead cores 12 of the present exemplary embodiment are formed by coating a single bead cord 12B with a coating layer 12A that is formed from a coating resin material so that this coating layer 12A is bonded to the bead cord 12B. This bead cord 12B is then wound for multiple loops in the tire circumferential direction, and the coating layers 12A of mutually adjacent bead cords 12B are bonded together via welding. In other words, the bead cores 12 of the present exemplary embodiment have a structure in which outer surfaces thereof are formed by the coating layer 12A, while the bead cords 12B are embedded in the interior thereof.

Here, monofilaments such as metal fibers or organic fibers, or multifilaments formed by twisting metal fibers or organic fibers together may be used for the bead cords 12B. Steel fibers may be used for the metal fibers, while aromatic polyamide fibers or aliphatic polyamide (i.e., nylon) fibers or the like may be used for the organic fibers. Note that the metal fibers and organic fibers that may be used are not limited to the fibers mentioned above. In the present exemplary embodiment, steel monofilament is used for the bead cords 12B.

In the present exemplary embodiment, the coating layer 12A is formed from a thermoplastic material having thermoplasticity (such as, for example, a thermoplastic resin or thermoplastic elastomer or the like). In addition, the coating layer 12A is formed from a coating resin material that has a higher tensile modulus than the coating rubber 13B that is used to coat the cords 13A of the carcass ply 14.

### (Bead Filler)

The bead filler 18 of the present exemplary embodiment is formed from a resin material and, as an example, is formed from a thermoplastic material having thermoplasticity (such as, for example, a thermoplastic resin or a thermoplastic elastomer).

The bead filler 18 may be formed from the same type of material as that used for the coating resin material forming the coating layer 12A, or may be formed from a different type of material.

In order to secure sufficient bending rigidity in the bead portion 20, the bead filler 18 is formed from a resin material having a higher tensile modulus (in other words, from a harder material) than that of a side rubber layer 24A and a side rubber layer 24B. In addition, the bead filler 18 is formed from a resin material having a higher tensile modulus than that of the coating rubber 13B coating the cords 13A of the carcass ply 14.

### (Buffer Layer)

As is shown in FIG. 1 through FIG. 3, outer circumferential surfaces of the bead core 12 and the bead filler 18 are covered by a sheet-shaped buffer layer 21 that is formed from an elastic material. In other words, the sheet-shaped buffer layer 21 is interposed between the bead core 12 and the carcass ply 14, and also between the bead filler 18 and the carcass ply 14.

The buffer layer 21 is formed from an elastic material having an intermediate tensile modulus between that of the resin material forming the bead filler 18 and that of the coating rubber 13B used to coat the cords 13A of the carcass ply 14. The buffer layer 21 may be formed from a rubber material, a resin material, or a material obtained by mixing a rubber material and a resin material together, or the like, however, it is preferably formed from a rubber material. If the buffer 21 layer is formed from a rubber material, then it is preferable that this rubber material is the same type as that used to form the coating rubber 13B.

Note that in a case in which the buffer layer 21 is formed from a resin material, then the same type of resin material as the coating resin material forming the coating layer 12A of the bead core 12, and as the resin material forming the bead filler 18 may be used or, alternatively, a different type of resin material may be used.

If at least a portion of the buffer layer 21 that is in contact with the coating layer 12A of the bead core 12, and a portion of the buffer layer 21 that is in contact with the bead filler 18 are formed from a rubber material, or from a resin material, then it is also possible for reinforcing fibers or the like to be embedded inside the interior thereof.

Note that, as an example, the tensile modulus (i.e., Young's Modulus) of the coating rubber 13B of the carcass ply 14 is set within a range of 10∼200 MPa.

The tensile modulus of the resin material forming the coating layer 12A of the bead core 12 is set higher than the tensile modulus of the coating rubber 13B and, as an example, is set within a range of 100∼1000 MPa.

The tensile modulus of the resin material forming the bead filler 18 is set higher than the tensile modulus of the coating rubber 13B and, as an example, is set within a range of 100∼1000 MPa.

The tensile modulus of the buffer layer 21 is set, as an example, within a range of 10∼200 MPa.

Within the above-described numerical range there are no restrictions on the values of the tensile moduli of both the coating rubber 13B and the buffer layer 21, and one may be harder than the other or, alternatively, they may both have the same hardness.

Within the above-described numerical range there are no restrictions on the values of the tensile moduli of both the coating layer 12B of the bead core 12 and the bead filler 18, and one may be harder than the other or, alternatively, they may both have the same hardness.

Note also that the thickness of the buffer layer 21 is preferably set within a range of 0.5∼3.0 mm.

An inner liner 22 that is formed from rubber is disposed on the pneumatic tire inner side of the carcass 16. In contrast, on the outer side in the tire width direction of the carcass 16, the side rubber layer 24A is disposed on the outer side in the tire radial direction, while the side rubber layer 24B is disposed on the inner side in the tire radial direction. Note that a portion of the side rubber layer 24B is folded back towards the inner side in the radial direction around the bead core 12, and extends as far as a portion of the tire inner surface.

In the present exemplary embodiment, a tire case 25 is formed by the bead core 12, the carcass 16, the bead filler 18, the inner liner 22, the side rubber layer 24A, and the side rubber layer 24B. In other words, the tire case 25 refers to a pneumatic tire frame component that forms the framework of the pneumatic tire 10.

### (Belt)

A belt 26 is disposed on an outer side of a crown portion of the carcass 16, in other words, on an outer side in the tire radial direction of the carcass 16. When viewed in a cross-section taken along the rotation axis thereof, the belt 26 of the present exemplary embodiment is formed in a flat shape. In other words, the belt 26 is formed so as to be rectilinear extending from one end towards another end in the width direction thereof and, apart from a portion on either side in the width direction thereof, is adhered to an outer circumferential surface of the carcass 16. The belt 26 of the present exemplary embodiment is formed by winding a plurality (two in the present exemplary embodiment) of reinforcing cords 30 around resin-coated cords 34 which are coated with resin 32. Note that the method of manufacturing the belt 26 is described below.

The cords used for the reinforcing cords 30 of the belt 26 are preferably thicker and have greater strength (namely, tensile strength) than the cords used for the carcass ply 14. Monofilaments such as metal fibers or organic fibers, or multifilaments formed by twisting these fibers together may be used for the reinforcing cords 30 of the belt 26. The reinforcing cords 30 of the present exemplary embodiment are formed by steel cords. For example, '1 x 5' steel cords having a diameter of 0.225 mm may be used for the steel cords 30, however, steel cords having another conventionally known structure may also be used.

A resin material having a higher tensile modulus than that of the rubber material forming the side rubber layers 24A and 24B, and that of the rubber material forming a tread 36 (described below) is used for the resin 32 coating the reinforcing cords 30. A thermoplastic resin having elasticity, a thermoplastic elastomer (TPE), or a thermosetting resin or the like may be used for the resin 32 coating the reinforcing cords 30. In consideration of the elasticity when the tire is running, and moldability during manufacturing, it is desirable that a thermoplastic elastomer be used.

Examples of the thermoplastic elastomer include a polyolefin-based thermoplastic elastomer (TPO), a polystyrene-based thermoplastic elastomer (TPS), a polyamide-based thermoplastic elastomer (TPA), a polyurethane-based thermoplastic elastomer (TPU), a polyester-based thermoplastic elastomer (TPC), and a dynamically cross-linked thermoplastic elastomer (TPV).

Moreover, examples of the thermoplastic resin include polyurethane resin, polyolefin resin, vinyl chloride resin, and polyamide resin and the like. Furthermore, thermoplastic resin materials that may be used include, for example, those having a deflection temperature under load (i.e., a load of 0.45 MPa) of 78°C or more as prescribed in IS075-2 or ASTM D648, a tensile yield strength of 10 MPa or more as prescribed in JIS K7113, a tensile elongation at break of 50% or more as prescribed in the same JIS K7113, and a Vicat softening temperature (Method A) of 130°C or more as prescribed in JIS K7206.

The tensile modulus (as prescribed in JIS K7113: 1995) of the resin 32 coating the reinforcing cords 30 is preferably 50 MPa or more. An upper limit of the tensile modulus of the resin 32 coating the reinforcing cords 30 is preferably 1000 MPa or less. Note that it is particularly preferable for the tensile modulus of the resin 32 coating the reinforcing cords 30 to be between 200∼500 MPa.

The thickness dimension of the belt 26 of the present exemplary embodiment is preferably larger than the diameter dimension of the reinforcing cords 30. In other words, it is preferable that the reinforcing cords 30 be completely embedded within the resin 32. In a case in which the pneumatic tire 10 is for a normal passenger vehicle, then specifically, it is preferable that the thickness dimension of the belt 26 be 70 mm or more.

### (Layer)

A vicinity of an end portion 26A in the tire width direction of the belt 26 is covered from the outer side in the tire radial direction by a belt-shaped layer 38. It is preferable that the layer 38 cover at least the reinforcing cords 30 of the belt 26 that are located on the outermost side in the tire width direction from the outer side in the tire radial direction. In the present exemplary embodiment, the layer 38 covers as far as the second reinforcing cord 30 in from the outermost side in the tire width direction. Additionally, the layer 38 extends further to the outer side in the tire width direction than the end portion 26A of the belt 26 so as to cover the end portion 26A of the belt 26 from the outer side in the tire width direction.

As the layer 38, a layer may be used that is formed, for example, by arranging a plurality of cords (not shown in the drawings) in parallel with each other and then coating these with rubber. Examples of the cords used in the layer 38 include organic fiber cords and steel cords. If steel cords are used for the layer 38, then steel cords having a lower bending rigidity than that of the cords used for the belt 26, in other words, steel cords that are narrower than the cords used for the belt 26 are used. Note that, instead of cords, it is also possible for woven fabric or non-woven cloth to be used for the layer 38. Moreover, either cords, woven fabric, or non-woven cloth that have been coated with resin may also be used for the layer 38.

Furthermore, it is also possible for the layer 38 to be formed solely from a rubber material or a resin material. In this case, the rubber material or resin material that is used to form the layer 38 has an intermediate tensile modulus between that of the resin 32 coating the reinforcing cords 30 and that of the rubber material forming the side rubber layer 24 and the rubber material forming the tread 36. Note that in the present exemplary embodiment, only the vicinity of the end portion 26A of the belt 26 is covered by the layer 38, however, if necessary, it is also possible to cover the entire belt 26 from the outer side in the tire radial direction with at least one wide-formed layer 38.

### (Tread)

The tread 36 which is formed from a rubber material is disposed on the outer side in the tire radial direction of the belt 26. A conventionally known rubber material is used for the second rubber material that is used for the tread 36. Drainage grooves 37 are formed in the tread 36. A conventionally known, typical pattern is used for the pattern of the tread 36.

It is preferable that a width BW of the belt 26 as measured in the tire axial direction is 75% or more relative to the ground contact width TW of the tread 36 as measured in the tire axial direction. Note that an upper limit of the width BW of the belt 26 is preferably 110% relative to the ground contact width TW.

Here, the ground contact width TW of the tread 36 is measured when the pneumatic tire 10 is fitted onto a standard rim as stipulated in the JATMA YEAR BOOK (Japan Automobile Tyre Manufacturers Association, Inc., 2018 edition), and is filled to an internal pressure of 100% of the air pressure (i.e., to the maximum air pressure) that corresponds to the maximum load capability at the applicable size/ply rating as per the JATMA YEAR BOOK (i.e., the load depicted in bold type in the Internal Pressure - Corresponding Load Capability Table), and when the pneumatic tire 10 is disposed in a stationary state such that the axis of rotation thereof is parallel to a horizontal flat surface, and when a mass that corresponds to this maximum load capability is applied thereto. Note that, at the place of use or at the place of manufacture, if TRA Standards or ETRTO Standards are being applied, then the tire conforms to the relevant Standards.

Note that it is preferable that an in-plane shear rigidity of the belt 26 is equal to or greater than that of a belt having a conventional structure in which cords are coated with rubber.

### (Actions and Effects)

Actions and effects of the pneumatic tire 10 of the present exemplary embodiment will now be described.

In the pneumatic tire 10 of the present exemplary embodiment, because the buffer layer 21 that reduces shear stress is disposed between the coating rubber 13B of the carcass ply 14 and the coating layer 12A of the bead core 12, and also between the coating rubber 13B and the bead filler 18, so that there is a gradual change in the tensile modulus (i.e., the rigidity) thereof, compared with a case in which the buffer layer 21 is not provided, it is possible to reduce shear stress that is generated in the coating rubber 13B of the carcass ply 14. As a result, it is possible to inhibit peeling of the coating rubber 13B (due to cracks occurring in the coating rubber 13B) of the carcass ply 14 that is caused by shear stress.

In the pneumatic tire 10 of the present exemplary embodiment, because the buffer layer 21 is formed from rubber, the bond between the buffer layer 21 and the coating rubber 13B of the carcass ply 14 is a bond between two rubber components, so that it is possible to increase the bond strength between the buffer layer 21 and the coating rubber 13B.

Note that in a case in which the buffer layer 21 is formed from a resin material, the bond between the buffer layer 21 and the coating layer 12A of the bead core 12, and also the bond between the buffer layer 21 and the bead filler 18 are each bonds between two resin components, so that it is possible to increase the bond strength between the buffer layer 21 and the coating layer 12A of the bead core 12, and also the bond strength between the buffer layer 21 and the bead filler 18.

### [Additional Exemplary Embodiments]

An exemplary embodiment of the present disclosure has been described above, however, it should be understood that the present disclosure is not limited to this exemplary embodiment and various modifications and the like are possible insofar as they do not depart from the spirit or scope of the present disclosure.

The buffer layer 21 is not limited to being formed from a single type of material and may instead have a plurality of layers that are each formed from a material having a different tensile modulus from that of the other layers. In this case, it is preferable that the modulus of elasticity of the layer on the coating rubber 13B side be set lower than the modulus of elasticity of the layer on the side of the material forming the bead filler 18 or of the material forming the coating layer 12A of the bead core 12 such that the modulus of elasticity becomes progressively higher from the coating rubber 13B towards the material forming the bead filler 18, or towards the material forming the coating layer 12A of the bead core 12.

The bead filler 18 of the above-described exemplary embodiment is formed from a resin material, however, it may instead be formed from a rubber material. In addition, in the bead core 12 of the above-described exemplary embodiment, the coating layer 12A is formed from a coating resin material, however, it may instead be formed from a rubber material.

Note that the structure of the present disclosure may be applied to a run-flat pneumatic tire whose side portions are reinforced by reinforcing rubber, and may also be applied to a pneumatic tire that is fitted onto a vehicle other than a normal passenger vehicle.

Priority is claimed on Japanese Patent Application No. 2018-103628, filed May 30, 2018, the disclosure of which is incorporated herein by reference.

All references, patent applications and technical specifications cited in the present specification are incorporated by reference into the present specification to the same extent as if the individual references, patent applications and technical specifications were specifically and individually recited as being incorporated by reference.

## Claims

1. A pneumatic tire, comprising:
a carcass having cords that are coated with a coating rubber;
at least one of a bead core or a bead filler having an outer surface that faces the carcass and being formed from a resin that is harder than the coating rubber; and
a buffer layer that is disposed between the coating rubber and the resin, and that reduces shear stress generated in the coating rubber.

2. The pneumatic tire according to Claim 1, wherein the buffer layer is formed from rubber.

3. The pneumatic tire according to Claim 2, wherein the rubber of the buffer layer is more resistant to shear deformation than the coating rubber.
